# EUROPÄISCHE PATENTSCHRIFT

(11) **EP 2 468 381 B1**
(45) Veröffentlichungstag und Bekanntmachung des Hinweises auf die Patenterteilung: **26.02.2014**
(21) Anmeldenummer: 11192271.2
(22) Anmeldetag: 07.12.2011
(51) Int. Cl.: B01D 35/30

(54) **Filtergehäuses**
Filter housing
Boîtier d'un filtre

(30) Priorität: 22.12.2010 DE 102010063940
(43) Veröffentlichungstag der Anmeldung: 27.06.2012
(73) Patentinhaber: MAHLE International GmbH, 70376 Stuttgart (DE)
(72) Erfinder: Fritz, Jochen, 73655 Plüderhausen (DE); Wetzel, Jörn, 70372 Stuttgart (DE)
(74) Vertreter: BRP Renaud & Partner

(56) Entgegenhaltungen:
- EP-A1- 0 484 710
- EP-A1- 0 537 520
- EP-A2- 1 211 399
- EP-A2- 1 961 948
- WO-A1-2006/056533
- WO-A1-2006/097443
- DE-A1-102004 054 274
- DE-U1- 29 504 607
- US-B1- 6 168 713

## Beschreibung

Die vorliegende Erfindung betrifft ein Gehäuse an einer Filtereinrichtung. Die Erfindung betrifft außerdem eine Filtereinrichtung mit einem derartigen Gehäuse.

Insbesondere fluidführende Bauteile in Kraftfahrzeugen, wie beispielsweise Filtereinrichtungen, weisen im Hinblick auf eine geforderte Crashstabilität oftmals faserverstärkte Kunststoffe auf, die jedoch insbesondere im Bereich von Anschlussstutzen den Nachteil aufweisen, dass sie lediglich eine geringe Elastizität besitzen, was bei einer Krafteinwirkung auf derartige Anschlussstutzen vergleichsweise schnell zu einem Brechen derselben bzw. zu einem Beschädigen führen kann.

Aus der US 6,168,713 B1 ist ein Kraftstofffilter mit einem gattungsgemäßen Bauteil aus faserverstärktem Kunststoff sowie einem Anbauteil aus faserlosem Kunststoff bekannt, wobei das Bauteil und das Anbauteil über eine Schweißverbindung miteinander verbunden sind.

Aus der WO 2006/097443 A1 ist ebenfalls ein Kraftstofffilter bekannt, bei welchem das Gehäuse insbesondere durch Zumischung von Carbonfasern leitfähig ist und ein Filtergehäusedeckel nicht. Der Deckel und das Filtergehäuse sind dabei über eine Schweißverbindung miteinander verbunden.

Auch aus der WO 2006/0566533 A1 ist ein Kraftstofffilter bekannt, bei welchem ein Deckel aus carbonfaserverstärktem Kunststoff zur elektrischen Leitung ausgebildet ist, wogegen das Gehäuse aus faserlosem und damit nicht gleitendem Kunststoff ausgebildet ist.

Die vorliegende Erfindung beschäftigt sich daher mit dem Problem, ein Bauteil für insbesondere eine Filtereinrichtung anzugeben, dass die aus dem Stand der Technik bekannten Nachteile nicht aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Bauteil an insbesondere einer Filtereinrichtung zweiteilig auszubilden, nämlich einerseits aus einem ersten, faserverstärktem Kunststoff, insbesondere mit einem hohem Anteil an Fasern in einer Kunststoffmatrix und andererseits aus einem zweiten, vollständig oder zumindest nahezu faserlosen Kunststoff also mit deutlich geringerem Anteil an Fasern in derselben Kunststoffmatrix. Das Bauteil für insbesondere eine Filtereinrichtung ist somit zumindest teilweise aus einem faserverstärktem Kunststoff ausgebildet, wobei zumindest ein Anbauteil vorgesehen ist, das aus einem Kunststoff mit nahezu keinen Fasern oder faserlos ausgebildet ist und das mit dem Bauteil über eine geeignete Verbindung, insbesondere Schweißverbindung verbunden ist. Das Bauteil ist als Filtergehäuse, vorzugsweise als Filtergehäusedeckel oder -Topf ausgebildet, wogegen das Anbauteil als Anschlussstutzen ausgebildet ist. Durch die erfindungsgemäße Ausbildung der Anschlussstutzen aus einem Kunststoff mit nahezu keinen Fasern oder ohne Fasern, weisen diese eine deutlich höhere Elastizität auf, wodurch die Gefahr eines Brechens bzw. von Beschädigungen bei einer Krafteinleitung an derartigen Anschlussstutzen deutlich reduziert wird. Gleichzeitig gewährleistet der faserverstärkte Kunststoff des Bauteils eine vergleichsweise steife Ausbildung desselben, wodurch diese hohe Festigkeitseigenschaften aufweist. Bei dem erfindungsgemäßen Bauteil werden somit zwei unterschiedliche

Kunststoffe, nämlich ein faserverstärkter Kunststoff und ein Kunststoff mit nahezu keinen Fasern oder ohne Fasern verwendet, wobei letzter insbesondere in Bereichen eingesetzt ist, in welchen eine vergleichweise hohe Elastizität gefordert wird.

Bei einer vorteilhaften Weiterbildung der erfindungsgemäßen Lösung weist der faserverstärkte Kunststoff Glasfasern, Aramidfaser, Kunststofffasern und/oder Kohlefasern auf. Bereits diese Aufzählung lässt erkennen, welche Flexibilität hinsichtlich des Einsatzes von Fasern möglich ist, ohne den Rahmen der vorliegenden Erfindung zu verlassen. Glasfasern beispielsweise bestehen aus geschmolzenem und zu dünnen, langen Fäden gezogenem Glas und sind alterungs- und witterungsbeständig, sowie chemisch resistent und nicht brennbar.

Gleichzeitig besitzen Glasfasern eine vergleichsweise hohe Elastizität, weshalb sie insbesondere auch zur Bewehrung von Kunststoffen verwendet werden. Aramidfasern beispielsweise besitzen ähnliche wie Kohlenfasern einen negativen Wärmeausdehnungskoeffizienten in Längsrichtung, wobei ihre spezifische Festigkeit sowie ihr Elastizitätsmodul deutlich niedriger sind als jene von Kohlefasern. Generell werden die erwähnten Fasern zur Verbesserung der mechanischen Eigenschaften im Sinne einer Bewehrung eingesetzt. Durch die willkürliche Anordnung der Fasern können die mechanischen Eigenschaften der damit verstärkten Kunststoffe in alle Richtung gesteigert werden.

Bei einer vorteilhaften Weiterbildung der erfindungsgemäßen Lösung weist der faserverstärkte Kunststoff als Matrix, in die die Fasern eingebettet werden, einen Kunststoff aus der Gruppe der thermoplastischen Polymere auf, insbesondere Polyamid.

Bei einer vorteilhaften Weiterbildung der erfindungsgemäßen Lösung weist der erste faserverstärkte Kunststoff einen Glasfaseranteil von 25 bis 35 Gewichtsprozent Glasfasern in der Kunststoffmatrix auf, bevorzugt 30 bis 35 oder 25- 30 Gewichtsprozent Glasfasern in der Kunststoffmatrix auf. Bei einer vorteilhaften Weiterbildung der erfindungsgemäßen Lösung weist der zweite Kunststoff einen Glasfaseranteil von 0 bis 10 Gewichtsprozent Glasfasern in der Kunststoffmatrix auf, bevorzugt 0 bis 5 Gewichtsprozent Glasfasern in der Kunststoffmatrix auf.

Bei einer vorteilhaften Weiterbildung der erfindungsgemäßen Lösung weist der erste faserverstärkte Kunststoff einen Gehalt an Fasern auf, der in etwa das 2-bis 20-fache, vorzugsweise das 4- bis 7-fache des Gehalts an Fasern im zweiten (faserverstärkten) Kunststoff beträgt.

Bei einer vorteilhaften Weiterbildung der erfindungsgemäßen Lösung wobei ein Bauteil der Filtereinrichtung das Gehäuse Filtereinrichtung bildet und verschlossen werden kann. Das Gehäuse bestehend aus Filtergehäusedeckel und -Topf der Filtereinrichtung sind durch geeignete Mittel, beispielsweise Verschweißen, Verschraubung, Verklipsung o.Ä. miteinander verbunden.

Bei einer vorteilhaften Weiterbildung der erfindungsgemäßen Lösung weist das Gehäuse der Filtereinrichtung Verbindungsmittel auf, die es erlauben das Gehäuse zum Wechseln eines darin enthaltenen Filterelementes zu öffnen.

Bei einer vorteilhaften Weiterbildung der erfindungsgemäßen Lösung weist das Gehäuse der Filtereinrichtung Verbindungsmittel auf, die es nicht erlauben das Gehäuse zum Wechseln eines darin enthaltenen Filterelementes zu öffnen, so dass die gesamte Filtereinrichtung gewechselt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Die dargestellte Filtereinrichtung ist nur Beispielhaft genannt, die Erfindung bezieht sich auf alle möglichen Varianten von Filtergehäusen für diverse Fluide, die verstärkt Vibrationen, also Kräften, beispielsweise in einem Kraftfahrzeug ausgesetzt sind und die im Falle eines Unfalls nicht beschädigt werden dürfen.

Dabei zeigen, jeweils schematisch,
- Fig. 1: eine Ansicht von der Seite auf eine Filtereinrichtung mit einem erfindungsgemäßen Bauteil,
- Fig. 2: eine Darstellung wie in Fig. 1, jedoch aus einer anderen Perspektive,
- Fig. 3: ebenfalls eine Ansicht wie in Fig. 1, jedoch von schräg oben.

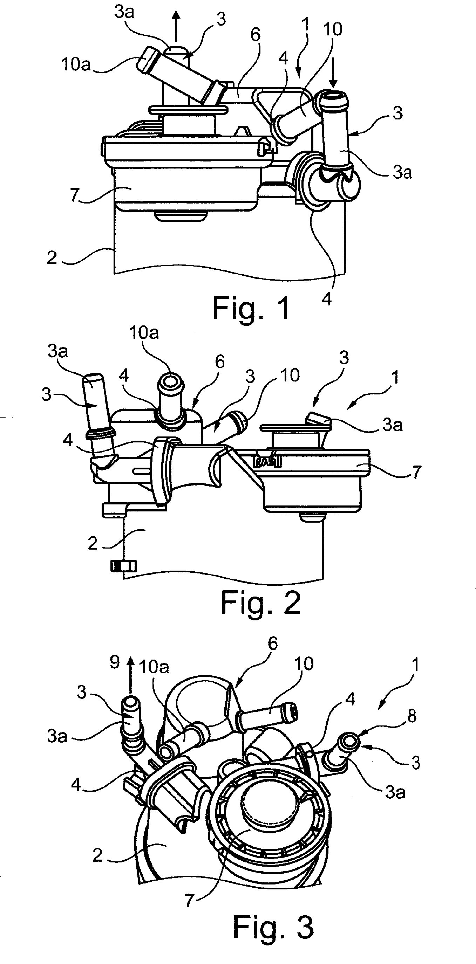

Entsprechend den Fig. 1 bis 3, weist eine Filtereinrichtung 1 ein Bauteil 2 auf. Im vorliegenden Fall handelt es sich dabei um einen Teil des Gehäuses, welches in diesem Fall als Filtergehäusedeckel ausgebildet ist. An diesem Bauteil 2 ist zumindest ein Anbauteil 3 angeschlossen, welches im vorliegenden Fall als Anschlussstutzen 3a ausgebildet ist. Erfindungsgemäß ist nunmehr das Bauteil 2 zumindest teilweise aus einem ersten, faserverstärktem Kunststoff ausgebildet, wogegen das zumindest eine Anbauteil 3 aus einem zweiten Kunststoff ohne Fasern oder mit nahezu keinen Fasern ausgebildet ist und mit dem Bauteil 2 über eine Verbindung, vorzugsweise ein Schweißverbindung 4 verbunden ist. Ein Zulauf 8 und ein Ablauf 9 der Filtereinrichtung 1 sind in Form von Anschlussstutzen 3a ausgebildet. Des Weiteren weist die Filtereinrichtung 1 ein Vorwärmventil 6, bzw. alternativ eine Heizung mit zugehörigen Stutzen 10 und 10a, für den Rücklauf des Fluids, vorzugsweise des Kraftstoffes, auf und eine Handpumpe 7 zum Befüllen der Filtereinrichtung 1 nach dem Wechsel der Filtereinrichtung 1 oder des in der Filtereinrichtung 1 enthaltenen Filterelementes. Gemäß den Fig. 1 bis 3, weist die Filtereinrichtung 1 einen Filtergehäusedeckel mit jeweils zwei am Filtergehäusedeckel angeschweißten Anschlussstutzen 3a auf. Auch die Stutzen 10, 10a können einen anderen Faseranteil in der Kunststoffmatrix aufweisen, als das Gehäuse des Vorwärmventils 6 und mit diesem verbunden, bevorzugt verschweißt sein.

Der Vorteil der erfindungsgemäßen Ausbildung des Bauteils 2 mit den daran angeschweißten Anbauteilen 3 besteht darin, dass die Anbauteile 3 aufgrund ihrer faserlosen oder nahezu faserlosen Ausbildung eine höhere Elastizität aufweisen und dadurch Verformungen, hervorgerufen beispielsweise durch eine Krafteinwirkung auf die Anbauteile 3, ohne beschädigt zu werden und insbesondere ohne abzubrechen aufnehmen können. Dabei sei angemerkt, dass das Bauteil 2 nicht nur als Filtergehäusedeckel ausgebildet sein kann, sondern beispielsweise auch als Teil einer Heiz-/Kühleinrichtung oder eines Kraftstoff-/Schmierstoffversorgungssystems. In gleicher Weise können auch die Anbauteile 3 nicht nur als Anschlussstutzen 3a, sondern als Tüllen, Kupplungen, etc. ausgebildet sein. Allen Ausführungsformen ist jedoch gemein, dass diese in einem Bereich aus einem faserverstärkten Kunststoff ausgebildet sind und in einem anderen Bereich, das heißt im Bereich des Anbauteils 3, aus einem faserlosen oder nahezu faserlosen Kunststoff, wobei die Verbindung zwischen dem Bauteil 2 und dem Anbauteil 3 vorzugsweise über eine jeweilige Schweißverbindung 4 realisiert wird. Die Schweißverbindung 4 kann beispielsweise mittels Reibschweißen, Laserschweißen, Heizspiegelschweißen oder ähnlichem hergestellt werden.

Bei einer vorteilhaften Weiterbildung der erfindungsgemäßen Lösung, weist der faserverstärkte Kunststoff des Bauteils 2 einen Fasergehalt von 25 bis zu 35 % auf. Ein Fasergehalt von über 35 % führt erfahrungsgemäß zu einer nicht vollständigen Einbettung der Fasern in die diese umgebende Kunststoffmatrix und dadurch zu einem qualitativen minderwertigen Verbundwerkstoff. Zwischen 0 und 35 % sind jedoch individuell frei wählbare Fasergehalte für das Bauteil 2 festlegbar, wobei der Fasergehalt sich an den jeweils erforderlichen mechanischen Eigenschaften orientiert. Generell ist auch denkbar, dass das Anbauteil 3 nicht aus vollständig faserlosem Kunststoff ausgebildet ist sondern einen vergleichsweise geringen Fasergehalt, beispielsweise 0 - 10 Gew.-%, vorzugsweise 5 Gew.-%, aufweist.

Als Fasern können beispielsweise Glasfasern, Aramidfasern, Kunststofffasern und/oder Kohlefasern zum Einsatz kommen. Die Auswahl entsprechender Fasertypen, Arten oder Längen orientiert sich dabei an den geforderten mechanischen Eigenschaften sowie den maximal möglichen Herstellungskosten.

Bei der erfindungsgemäßen Filtereinrichtung 1 ist durch die vergleichsweise elastische Ausbildung und Anbindung der Anbauteile 3, das heißt der Anschlussstutzen 3a, über die jeweilige Schweißverbindung 4 an das Bauteil 2, das heißt den Filtergehäusedeckel, ein Bruch- bzw. Beschädigungsrisiko deutlich reduziert, da die Elastizität der Anbauteile 3 aufgrund ihrer faserlosen oder nahezu faserlosen Ausbildung bzw. ihres im Vergleich zum Bauteil 2 sehr geringen Fasergehalts vergleichsweise hoch liegt.

Wichtig ist, dass der Gehalt an Fasern des ersten faserverstärkten Kunststoffes in etwa das 2 bis 20 -fache des Gehalts an Fasern im zweiten faserverstärkten Kunststoff beträgt, sofern im zweiten Kunststoff überhaupt Fasern vorhanden sind.

## Patentansprüche

1. Bauteil (2) an einer Filtereinrichtung (1), wobei
- das Bauteil (2) zumindest teilweise aus einem aus einem ersten, faserverstärktem Kunststoff mit einem hohem Anteil an Fasern in einer Kunststoffmatrix ausgebildet ist,
- zumindest ein Anbauteil (3) vorgesehen ist, das aus einem zweiten, vollständig oder zumindest nahezu faserlosen Kunststoff also mit deutlich geringerem Anteil an Fasern in derselben Kunststoffmatrix ausgebildet ist und das mit dem Bauteil (2) über eine Schweißverbindung (4) verbunden ist,
**dadurch gekennzeichnet,**
**dass** das Bauteil (2) als Filtergehäuse, vorzugsweise als Filtergehäusedeckel oder -Topf, und das Anbauteil (3) als Anschlussstutzen (3a) ausgebildet sind.

2. Bauteil nach Anspruch 1,
**dadurch gekennzeichnet,**
**dass** der faserverstärkte Kunststoff des Bauteils (2) einen Fasergehalt von 25-35 Gew.-% aufweist.

3. Bauteil nach einem der Ansprüche 1 oder 2,
**dadurch gekennzeichnet,**
**dass** der Kunststoff des Anbauteils (3) einen Fasergehalt von 0-10 Gew.-% aufweist.

4. Bauteil nach einem der Ansprüche 1 bis 3,
**dadurch gekennzeichnet,**
**dass** der faserverstärkte Kunststoff des Bauteils (2) und/oder des Anbauteils (3) Glasfasern, Aramidfasern, Kunststofffasern und/oder Kohlefasern aufweist.

5. Filtereinrichtung (1) mit einem Bauteil (1) und einem Anbauteil (3) nach einem der Ansprüche 1 bis 4.

6. Filtereinrichtung nach Anspruch 5,
**dadurch gekennzeichnet,**
**dass** die Filtereinrichtung (1) als Schmier- oder Kraftstofffilter ausgebildet ist.

7. Filtereinrichtung nach Anspruch 5 oder 6,
**dadurch gekennzeichnet,**
**dass** das Bauteil (2) als Filtergehäusedeckel oder als Teil einer Heiz-/Kühleinrichtung ausgebildet ist.

## Claims

1. A component (2) on a filter device (1), wherein
- the component (2) is formed at least partially from a first fiber-reinforced plastic having a high fiber content in a plastic matrix,
- at least one attachment part (3) is provided that is formed from a second plastic that is completely or at least nearly fiber-free, thus has a considerably lower fiber content, in the same plastic matrix, and that is connected to the component (2) via a welded connection (4), **characterized in**
**that** the component (2) is formed as a filter housing, preferably as a filter housing cover or pot, and the attachment part (3) is formed as a connection nozzle (3a) .

2. The component according to claim 1,
**characterized in**
**that** the fiber-reinforced plastic of the component (2) has a fiber content of 25 - 35% by weight.

3. The component according to claim 1 or claim 2, **characterized in**
**that** the plastic of the attachment part (3) has a fiber content of 0 - 10% by weight.

4. The component according to any one of the claims 1 to 3,
**characterized in**
**that** the fiber-reinforced plastic of the component (2) and/or the attachment part (3) comprises glass fibers, aramid fibers, plastic fibers and/or carbon fibers.

5. A filter device (1) comprising a component (1) and an attachment part (3) according to any one of the claims 1 to 4.

6. The filter device according to claim 5,
**characterized in**
**that** the filter device (1) is formed as a lubricant filter or fuel filter.

7. The filter device according to claim 5 or claim 6, **characterized in that**
the component (2) is formed as a filter housing cover or as part of a heating/cooling device.

## Revendications

1. Composant (2) sur un dispositif de filtrage (1), dans lequel :
- le composant (2) est conçu au moins partiellement dans un premier plastique renforcé par des fibres avec une fraction élevée de fibres dans une matrice plastique,
- au moins une pièce rapportée (3) est prévue, qui est conçue dans un deuxième plastique complètement ou au moins approximativement exempt de fibres, c'est-à-dire avec une fraction considérablement moindre de fibres dans la même matrice plastique et qui est reliée au composant (2) par l'intermédiaire d'une liaison de soudure (4),
**caractérisé en ce que** le composant (2) est conçu comme un logement de filtre, de préférence comme un couvercle ou un pot de logement de filtre, et la pièce rapportée (3) est conçue comme un embout de raccordement (3a).

2. Composant selon la revendication 1, **caractérisé en ce que** le plastique renforcé par des fibres du composant (2) présente une teneur en fibres de 25-35% du poids.

3. Composant selon une des revendications 1 ou 2, **caractérisé en ce que** le plastique de la pièce rapportée (3) présente une teneur en fibres de 0-10% du poids.

4. Composant selon une des revendications 1 à 3, **caractérisé en ce que** le plastique renforcé par des fibres du composant (2) et/ou de la pièce rapportée (3) présente des fibres de verre, fibres d'aramide, fibres de plastique et/ou fibres de carbone.

5. Dispositif de filtrage (1) comportant un composant (1) et une pièce rapportée (3) selon une des revendications 1 à 4.

6. Dispositif de filtrage selon la revendication 5, **caractérisé en ce que** le dispositif de filtrage (1) est conçu comme un filtre à lubrifiant ou à carburant.

7. Dispositif de filtrage selon la revendication 5 ou 6, **caractérisé en ce que** le composant (2) est conçu comme un couvercle de logement de filtre ou comme une partie d'un dispositif de chauffage/refroidissement.
